# EUROPEAN PATENT APPLICATION

(11) **EP 4 354 717 A1**
(43) Date of publication of application: **17.04.2024**
(21) Application number: 23202282.2
(22) Date of filing: 06.10.2023
(51) Int. Cl.: H02M 1/36

(54) **POWER CONVERTER APPARATUS**

(30) Priority: 13.10.2022 JP 2022164674
(71) Applicant: OMRON Corporation, Kyoto-shi, Kyoto 600-8530 (JP)
(72) Inventor: TANINO, Kohei, Kyoto 600-8530 (JP); NAGANO, Masaaki, Kyoto 600-8530 (JP); WATANABE, Tomonori, Kyoto 600-8530 (JP)
(74) Representative: HGF

(57) **Abstract**

A diode D1 is connected between a DC power supply 2 and switching elements TR1, TR2, a forward direction of the diode D1 being defined from the DC power supply 2 to the switching elements TR1, TR2. A relay 11 is connected in parallel to the diode D 1. A relay control circuit controls the relay 1 1 to be turned off when an input voltage VIN starts to be applied to a power converter apparatus 1, and to be turned on when a forward voltage is applied to the diode D1.

## Description

### TECHNICAL FIELD

The present disclosure relates to a power converter apparatus.

### BACKGROUND ART

Patent Document 1 discloses a power supply circuit that generates DC power from supplied AC power. The power supply circuit is provided with a rectifier including a diode bridge for both-wave rectification of the supplied AC power.

### CITATION LIST

### PATENT DOCUMENTS

PATENT DOCUMENT 1: Japanese Patent No. JP 2919363 B2

### SUMMARY OF INVENTION

### TECHNICAL PROBLEM

The diode has a certain resistance even when a current flows in the forward direction. Therefore, when the circuit is provided with a diode bridge as disclosed in Patent Document 1, the diode bridge may generate heat, thus resulting in a loss. Therefore, for example, by using a DC power distribution network instead of an AC power distribution network, it is not necessary to perform rectification (that is, provide the diode bridge) at an input stage of each electric apparatus connected to the power distribution network becomes unnecessary, and therefore, it is possible to reduce heat and loss.

However, an electric apparatus operable with supplied DC power may be provided with a diode to protect the electric apparatus from an input voltage of incorrect polarity. Also in such a diode, heat and loss may occur. Therefore, it is necessary to protect the electric apparatus from the input voltage of opposite polarity, without significantly increasing heat and loss.

An object of the present disclosure is to provide a power converter apparatus that converts an input voltage supplied from a DC power supply, into am output voltage, the power converter apparatus being capable of protecting the apparatus itself from an input voltage of opposite polarity, without significantly increasing heat and loss.

### SOLUTION TO PROBLEM

According to a power converter apparatus of a first aspect of the present disclosure, the power converter apparatus converts an input voltage supplied from a DC power supply, into an output voltage. The power converter apparatus is provided with: at least one switching element; a first diode connected between the DC power supply and the switching element, a forward direction of the first diode being defined from the DC power supply to the switching element; a relay connected in parallel to the first diode; and a relay control circuit configured to control the relay. The relay control circuit controls the relay to be turned off when the input voltage starts to be applied to the power converter apparatus, and to be turned on when a forward voltage is applied to the first diode.

With such a configuration, it is possible to protect the apparatus itself from the input voltage of opposite polarity, without significantly increasing heat and loss.

According to a power converter apparatus of a second aspect of the present disclosure, the power converter apparatus of the first aspect is further configured as follows. The relay control circuit turns on the relay when a voltage at a node between the switching element and the relay exceeds a predetermined threshold.

With such a configuration, it is possible to turn on the relay when a forward voltage is applied to the first diode.

According to a power converter apparatus of a third aspect of the present disclosure, the power converter apparatus of the first aspect is further configured as follows. The power converter apparatus is further provided with a transformer including a primary winding connected to the switching element, a secondary winding, and an auxiliary winding electromagnetically coupled to the primary winding and the secondary winding. The relay control circuit turns on the relay when a voltage generated in the auxiliary winding exceeds a predetermined threshold.

With such a configuration, it is possible to turn on the relay when a forward voltage is applied to the first diode.

According to a power converter apparatus of a fourth aspect of the present disclosure, the power converter apparatus of one of the first aspect to third is further configured as follows. The power converter apparatus is further provided with: a capacitor connected so that the input voltage is applied from the DC power supply via the first diode or the relay; and a resistor connected in series to the first diode. The relay is connected in parallel to the first diode and the resistor.

With such a configuration, it is possible to reduce the ripple voltage, and mitigate an inrush current to the capacitor.

According to a power converter apparatus of a fifth aspect of the present disclosure, the power converter apparatus of the fourth aspect is further configured as follows. The power converter apparatus is further provided with a second diode connected in parallel to the capacitor.

With such a configuration, it is possible to improve the reverse withstand voltage for the capacitor and other components.

### ADVANTAGEOUS EFFECTS OF INVENTION

According to the power converter apparatus of one aspect of the present disclosure, it is possible to protect the apparatus itself from the input voltage of opposite polarity, without significantly increasing heat and loss.

### BRIEF DESCRIPTION OF DRAWINGS

Fig. 1 is a circuit diagram illustrating an exemplary configuration of a power converter apparatus 1 according to an embodiment;
Fig. 2 is a timing chart illustrating an exemplary operation of the power converter apparatus 1 of Fig. 1;
Fig. 3 is a circuit diagram illustrating an exemplary configuration of a power converter apparatus 1A according to a first modified example of the embodiment; and
Fig. 4 is a circuit diagram illustrating an exemplary configuration of a power converter apparatus 1B according to a second modified example of the embodiment.

### DESCRIPTION OF EMBODIMENTS

### [EMBODIMENT]

Hereinafter, an embodiment according to one aspect of the present disclosure will be described with reference to the drawings. In the drawings, the same reference numerals denote similar components.

### [EXEMPLARY CONFIGURATION OF EMBODIMENT]

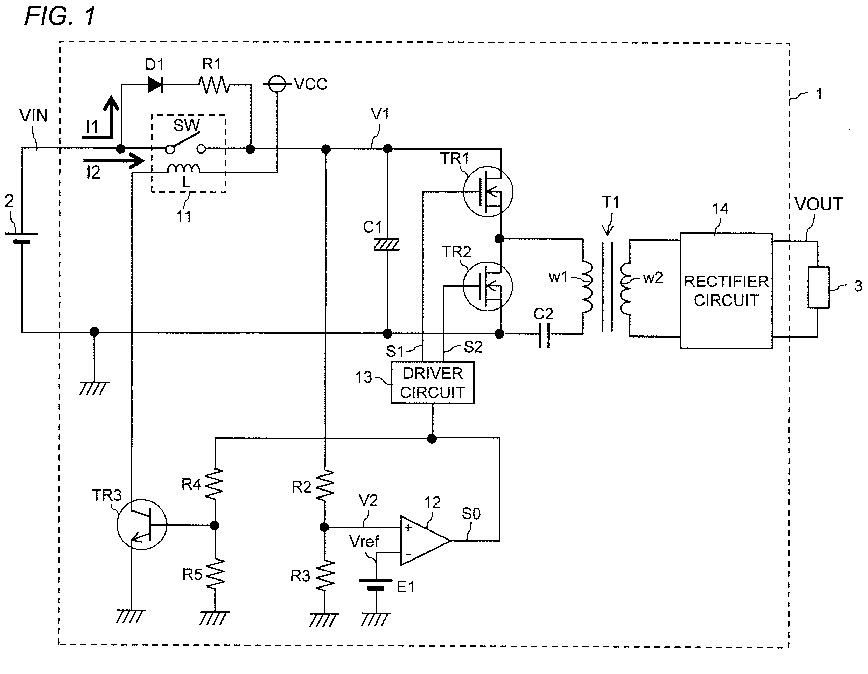

Fig. 1 is a circuit diagram illustrating an exemplary configuration of a power converter apparatus 1 according to the embodiment. The power converter apparatus 1 converts an input voltage VIN supplied from a DC power supply 2, into an output voltage VOUT, and supplies the output voltage VOUT to a load apparatus 3. The DC power supply 2 may be, for example, a rechargeable battery, a combination of an AC power supply and a rectifier device, or a DC power distribution network. The load apparatus 3 is, for example, an electric apparatus operable with DC power.

The power converter apparatus 1 is provided with a relay 11, a comparator 12, a drive circuit 13, a rectifier circuit 14, a capacitor C1, a capacitor C2, a diode D1, a reference voltage source E1, resistors R1 to R5, a transformer T1, and switching elements TR1 to TR3.

The switching elements TR1, TR2 are connected in series to each other, across a positive bus connected to a positive electrode of the DC power supply 2, and a negative bus connected to a negative electrode of the DC power supply 2. The switching elements TR1, TR2 are configured as, for example, a half-bridge circuit. The switching elements TR1, TR2 are, for example, field effect transistors.

The diode D1 and the resistor R1 are connected in series to each other, between the DC power supply 2 and the switching elements TR1, TR2. The forward direction of the diode D1 is defined from the DC power supply 2 to the switching elements TR1, TR2. Fig. 1 illustrates an example in which the diode D1 and the resistor R1 are inserted into the positive bus. The relay 11 is connected in parallel to the diode D1 and the resistor R1. The relay 11 is provided with: a switch SW, and a coil L that moves a movable contact of the switch SW. When the switch SW is turned off, a current I1 flows through the diode D1 and the resistor R1. On the other hand, when the switch SW is turned on, a current 12 flows through the relay 11. When the switch SW is on, the relay 11 has a much smaller resistance than the forward resistance of the diode D1.

The capacitor C1 is connected across the positive bus and the negative bus so that the input voltage VIN is applied from the DC power supply 2 via the diode D1 and the resistor R1, or via the relay 11. The capacitor C1 is, for example, an electrolytic capacitor.

The transformer T1 is provided with a primary winding w1 connected to both ends of the switching element TR2, and a secondary winding w2 connected to the rectifier circuit 14. The capacitor C2 is connected between the switching element TR2 and the primary winding w1 of the transformer T1. The rectifier circuit 14 rectifies an AC voltage generated in the secondary winding w2 of the transformer T1 to generate an output voltage VOUT.

The resistors R2, R3 generate a voltage V2 obtained by dividing the voltage V1 at the node between the switching elements TR1, TR2 and the relay 11, and apply the voltage V2 to a non-inverting input terminal of the comparator 12. The reference voltage source E1 generates and applies a reference voltage Vref to an inverting input terminal of the comparator 12. The reference voltage Vref is set corresponding to a predetermined threshold voltage Vth indicating a minimum of the voltage V1 to be applied to the switching elements TR1, TR2. When the input voltage VIN is 380 V, the threshold voltage Vth may be set to, for example, 370 V. The comparator 12 outputs a signal S0 indicating whether or not the voltage V2 is higher than the reference voltage Vref, that is, whether the voltage V1 is higher than the threshold voltage Vth. In a case of V2 ≤ Vref, the signal S0 is low, and in a case of V2 > Vref, the signal S0 is high.

The drive circuit 13 generates control signals S1, S2 for alternately turning on the switching elements TR1, TR2 at a certain duty ratio, and applies the control signals S1, S2 to control terminals (gates) of the switching elements TR1, TR2. The drive circuit 13 may generate the control signals S1, S2 according to the signal S0 so as to keep both the switching elements TR1, TR2 off immediately after the input voltage VIN starts to be applied to the power converter apparatus 1, and to start operations of the switching elements TR1, TR2 after the voltage V1 becomes higher than the threshold voltage Vth.

The resistors R4, R5 divide the voltage of the signal S0 and apply the divided voltage to a control terminal of the switching element TR3. When the switching element TR3 is turned on, a current flows through the coil L of the relay 11, and therefore, the switch SW is turned on. On the other hand, when the switching element TR3 is turned off, the switch SW is also turned off. The switching element TR3 is, for example, a bipolar transistor.

The resistors R4, R5 and the switching element TR3 are an example of a relay control circuit for controlling the relay 11 according to the signal S0.

### [OPERATION OF EMBODIMENT]

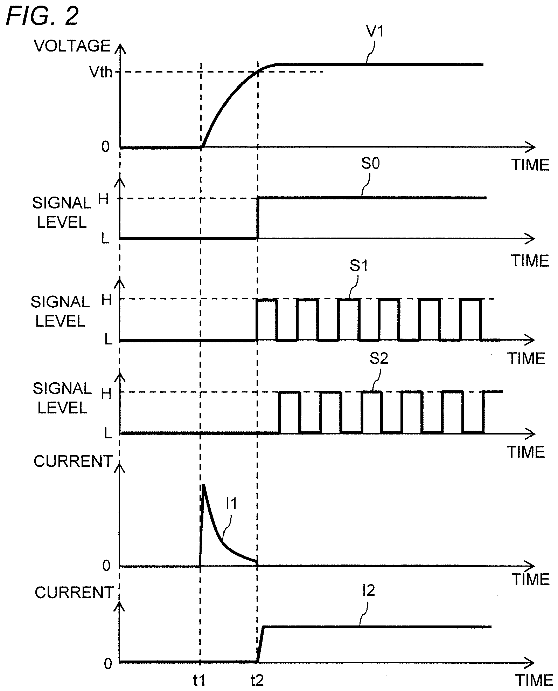

Fig. 2 is a timing chart illustrating an exemplary operation of the power converter apparatus 1 of Fig. 1.

At a time t1, the input voltage VIN starts to be applied from the DC power supply 2 to the power converter apparatus 1. Since V1 ≤ Vth is satisfied immediately after the input voltage VIN starts to be applied to the power converter apparatus 1, the signal S0 is low. At this time, both the switching elements TR1, TR2 are kept off. Also at this time, the switch SW of the relay 11 is turned off, and the current I1 flows through the diode D1 and the resistor R1. As the capacitor C1 is charged by the current I1, the voltage V1 gradually increases, and the current I1 gradually decreases.

When the voltage V1 reaches the threshold voltage Vth at a time t2, the signal S0 transitions from a low level to a high level. At this time, the switching elements TR1, TR2 are alternately turned on at a certain duty ratio according to the control signals S1, S2. Also at this time, the switch SW of the relay 11 is turned on, and therefore, the current I2 flows through the relay 11, instead of the current I1. Since power is supplied from the power converter apparatus 1 to the load apparatus 3 after the time t2, the current I2 becomes larger than the current I1 flowing immediately before the switch SW of the relay 11 is turned on. Strictly speaking, the current I2 includes a ripple component, but in Fig. 2, fluctuation due to the ripple component is omitted for ease of illustration.

The relay control circuit controls the relay 11 to be turned off when the input voltage VIN is not applied to the power converter apparatus 1, and when the input voltage VIN starts to be applied to the power converter apparatus 1. Thereafter, the relay control circuit controls the relay 11 to be turned on when a forward voltage is applied to the diode D1. Specifically, when the input voltage VIN of correct polarity is applied to the power converter apparatus 1, as a result, some charge is accumulated in the capacitor C1, and the voltage V1 exceeds the threshold voltage Vth, the relay control circuit turns on the relay 11. When the input voltage VIN of opposite polarity is applied to the power converter apparatus 1, the power converter apparatus 1 is protected by the diode D1. In addition, when the switch SW is turned on, the relay 11 has a resistance much smaller than the forward resistance of the diode D1, as described above. Therefore, when the input voltage VIN of correct polarity is applied to the power converter apparatus 1, it is possible to reduce heat and loss by turning on the relay 11, as compared with the case where the current I1 flows via the diode D1 and the resistor R1. As described above, by using the diode D1 and the relay 11, the power converter apparatus 1 can protect the apparatus itself from the input voltage VIN of opposite polarity, without significantly increasing heat and loss.

### [MODIFIED EXAMPLES OF EMBODIMENT]

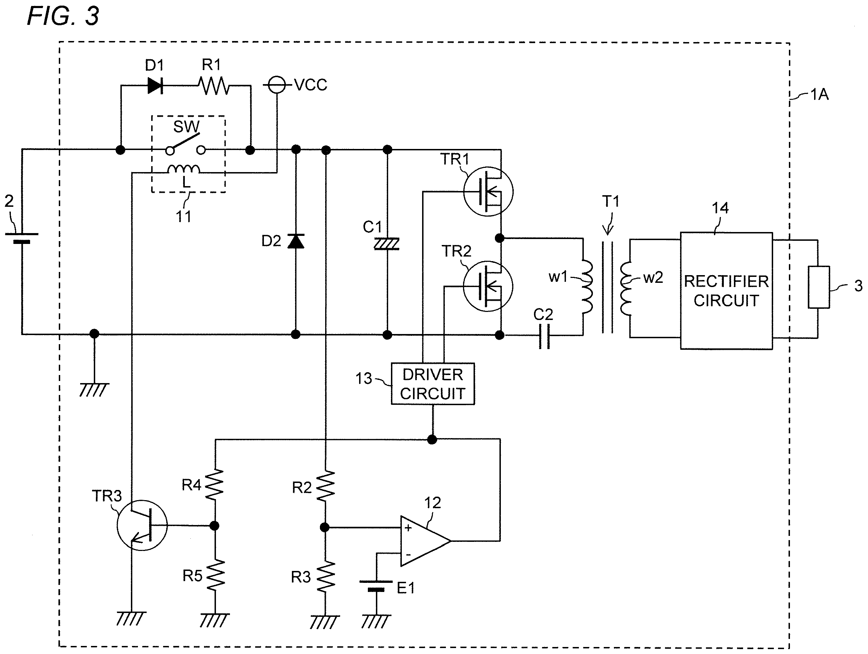

Fig. 3 is a circuit diagram illustrating an exemplary configuration of a power converter apparatus 1A according to a first modified example of the embodiment. The power converter apparatus 1A is provided with a diode D2 connected in parallel to a capacitor C1, in addition to the components of the power converter apparatus 1 of Fig. 1. Since the diode D2 is further provided, it is possible to improve the reverse withstand voltage for the capacitor C1 and other components.

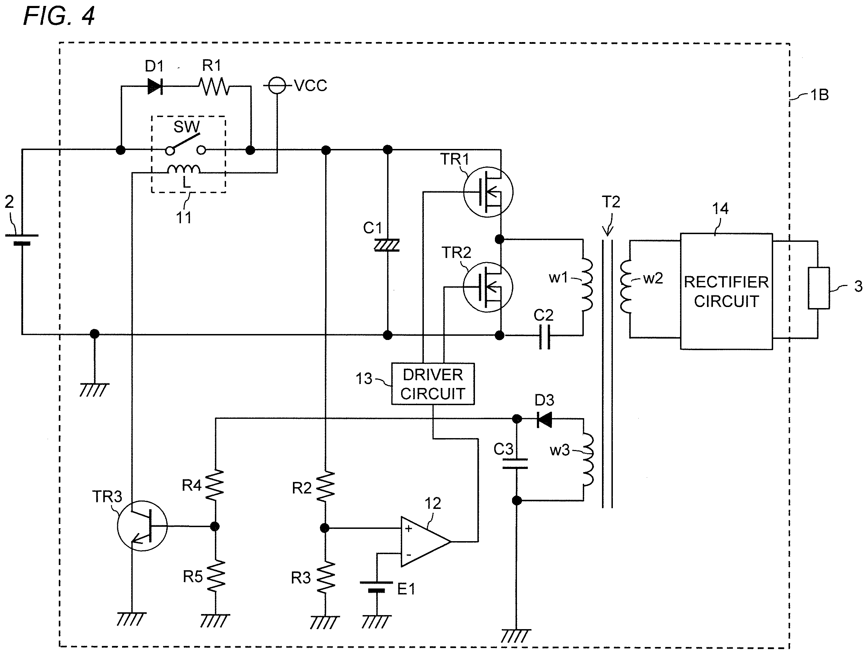

Fig. 4 is a circuit diagram illustrating an exemplary configuration of a power converter apparatus 1B according to a second modified example of the embodiment. The power converter apparatus 1B is provided with a transformer T2 instead of the transformer T1 in Fig. 1, and further provided with a capacitor C3 and a diode D3. The transformer T2 is provided with the primary winding w1 and the secondary winding w2, and further provided with an auxiliary winding w3 electromagnetically coupled to a primary winding w1 and a secondary winding w2. One end of the auxiliary winding w3 is connected to a resistor R4 via the diode D3, and the other end is grounded. A node between the diode D3 and the resistor R4 is grounded via the capacitor C3. The diode D3, the capacitor C3, the resistors R4, R5, and a switching element TR3 are an example of a relay control circuit for controlling the relay 11 according to a voltage generated in the auxiliary winding w3. When the input voltage VIN starts to be applied to the power converter apparatus 1B, since both switching elements TR1, TR2 are kept off, the voltage generated in the auxiliary winding w3 is zero, and therefore, the relay control circuit turns off the relay 11. Thereafter, when the voltage V1 reaches the threshold voltage Vth, the switching elements TR1, TR2 start to operate, and the voltage generated in the auxiliary winding w3 gradually increases. The relay control circuit turns on the relay 11 when the voltage generated in the auxiliary winding w3 exceeds a predetermined threshold. In other words, when a forward voltage is applied to a diode D1, and the switching elements TR1, TR2 are operating, the relay control circuit turns on the relay 11. According to the power converter apparatus 1B of Fig. 4, it is possible to control the relay 11 by detecting the voltage generated in the auxiliary winding w3.

### [ADVANTAGEOUS EFFECTS OF EMBODIMENT]

Since the power converter apparatus 1 according to the embodiment is provided with the diode D1, it is possible to protect the apparatus itself from the input voltage of opposite polarity. For example, due to erroneous connection of the power converter apparatus 1 and the DC power supply 2, the input voltage of opposite polarity may be applied to the power converter apparatus 1. When the input voltage of opposite polarity is applied, the relay 11 is not turned on, and the current is blocked by the diode D1.

Since the power converter apparatus 1 according to the embodiment is provided with the capacitor C1, it is possible to reduce the ripple voltage. In addition, since the power converter apparatus 1 according to the embodiment is provided with the resistor R1, it is possible to mitigate an inrush current to the capacitor C1.

When a forward current flows through the diode D1, and when a current flows through the resistor R1, the diode D1 and the resistor R1 may generate heat, thus resulting in a loss. Since the power converter apparatus 1 according to the embodiment is provided with the relay 11, which is turned on when a forward voltage is applied to the diode D1 and the switching elements TR1, TR2 are operating, it is possible to reduce heat and loss. For example, in a case where the resistor R1 has a thermal fuse, since a current flows through the resistor R1 only immediately after the input voltage VIN starts to be applied to the power converter apparatus 1 (that is, when the capacitor C1 is charged), the resistor R1 is not fused.

According to the power converter apparatus 1 of the embodiment, since the switching elements TR1, TR2 operate only when the voltage V1 is sufficiently large (V1 > Vth), it is possible to prevent overcurrent.

Since the power converter apparatus 1 according to the embodiment operates with the DC power supplied from the DC power supply 2, it is not necessary to provide a diode bridge at the input stage, it is possible to avoid heat and loss due to such a diode bridge, and it is possible to reduce the circuit size.

A technology called "DC industry" has been proposed, for energy saving, in which electric apparatuses and a DC power distribution network operable with a DC voltage of 300 to 400 V are provided instead of conventional electric apparatuses operable with an AC voltage of 100 to 200 V. The power converter apparatus 1 according to the embodiment can be applied to, for example, an electric apparatus for a DC industry. The power converter apparatus 1 according to the embodiment can reduce the size and improve the efficiency, as compared with a power converter apparatus that converts both AC and DC input voltages into an output voltage. In addition, the power converter apparatus 1 according to the embodiment can reduce the size as compared with a conventional power converter apparatus that converts a DC input voltage into an output voltage.

As described above, the power converter apparatus 1 according to the embodiment can protect the apparatus itself from the input voltage of opposite polarity, without significantly increasing heat and loss.

### [OTHER MODIFIED EXAMPLES]

Although the embodiment of the present disclosure has been described in detail above, the above descriptions are mere examples of the present disclosure in all respects. Needless to say, various improvements and modifications can be made without departing from the scope of the present disclosure. For example, the following changes can be made. Hereinafter, components similar to those of the above embodiments are indicated by similar reference signs, and points similar to those of the above embodiment will be omitted as appropriate. The following modified embodiments can be combined as appropriate.

The power converter apparatus may be provide with an additional capacitor in parallel with the resistor R3. As a result, when a certain time has elapsed after an inrush current flows through the capacitor C1, the switching elements TR1, TR2 can start to operate, and the relay 11 can be turned on. For example, in a case where the input voltage VIN is 390 V, and the reference voltage Vref is set to a value corresponding to Vth = 370 V, the signal S0 transitions from the low level to the high level when the voltage V1 reaches 390 V, due to the delay of the additional capacitor.

The capacitor C1 and the resistor R1 may be omitted.

The diode D1, the resistor R1, and the relay 11 may be inserted into the negative bus, instead of being inserted into the positive bus.

The power converter apparatus may supply an output voltage to a load apparatus operable with AC power, instead of the load apparatus operable with DC power. In this case, the rectifier circuit 14 on the secondary side of the transformer can be removed.

The power converter apparatus may be configured as an asynchronous rectification converter including at least one switching element and diode, instead of a synchronous rectification converter including a plurality of field effect transistors or bipolar transistors.

The power converter apparatus may be provide with one or more switching elements configured as a forward circuit, a flyback circuit, or a full-bridge circuit, instead of the switching elements TR1, TR2 configured as the half-bridge circuit.

The power converter apparatus may be configured as a non-isolated converter not including a transformer, instead of the isolated converter including a transformer.

### [SUMMARY OF EMBODIMENTS]

The power converter apparatuses according to aspects of the present disclosure may be expressed as follows.

A power converter apparatus 1 according one aspect of the present disclosure converts an input voltage VIN supplied from a DC power supply 2, into an output voltage VOUT. The power converter apparatus 1 is provided with: at least one switching element TR1, TR2; a diode D1 connected between the DC power supply 2 and the switching element TR1, TR2, a forward direction of the diode D1 being defined from the DC power supply 2 to the switching element TR1, TR2; a relay 11 connected in parallel to the diode D1; and a relay control circuit configured to control the relay 11. The relay control circuit controls the relay 11 to be turned off when the input voltage VIN starts to be applied to the power converter apparatus 1, and to be turned on when a forward voltage is applied to the diode D1.

According to the power converter apparatus 1 of the one aspect of the present disclosure, the relay control circuit turns on the relay 11 when a voltage at a node between the switching element TR1, TR2 and the relay 11 exceeds a predetermined threshold.

The power converter apparatus 1B according the one aspect of the present disclosure is further provided with a transformer T1 including a primary winding w1 connected to the switching element TR1, TR2, a secondary winding w2, and an auxiliary winding w3 electromagnetically coupled to the primary winding w1 and the secondary winding w2. The relay control circuit turns on the relay 11 when a voltage generated in the auxiliary winding w3 exceeds a predetermined threshold.

The power converter apparatus 1 according the one aspect of the present disclosure is further provided with :a capacitor C1 connected so that the input voltage VIN is applied from the DC power supply 2 via the diode D1 or the relay 11; and a resistor R1 connected in series to the diode D1. The relay 11 is connected in parallel to the diode D1 and the resistor R1.

The power converter apparatus 1A according the one aspect of the present disclosure is further provided with a diode D2 connected in parallel to the capacitor C1.

### INDUSTRIAL APPLICABILITY

The power converter apparatus according to each aspect of the present disclosure is applicable to an electric apparatus operable with DC power supplied from a DC power supply.

### REFERENCE SIGNS LIST

1, 1A, 1E: POWER CONVERTER APPARATUS
2: DC POWER SUPPLY
3: LOAD APPARATUS
11: RELAY
12: COMPARATOR
13: DRIVER CIRCUIT
14: RECTIFIER CIRCUIT
C1 to C3: CAPACITOR
D1 to D3: DIODE
E1: REFERENCE VOLTAGE SOURCE
R1 to R5: RESISTOR
R1, T2: TRANSFORMER
TR1 to TR3: SWITCHING ELEMENT

## Claims

1. A power converter apparatus for converting an input voltage supplied from a DC power supply, into an output voltage, the power converter apparatus comprising:
at least one switching element;
a first diode connected between the DC power supply and the switching element, a forward direction of the first diode being defined from the DC power supply to the switching element;
a relay connected in parallel to the first diode; and
a relay control circuit configured to control the relay to be turned off when the input voltage starts to be applied to the power converter apparatus, and to be turned on when a forward voltage is applied to the first diode.

2. The power converter apparatus as claimed in claim 1,
wherein the relay control circuit turns on the relay when a voltage at a node between the switching element and the relay exceeds a predetermined threshold.

3. The power converter apparatus as claimed in claim 1, further comprising a transformer including a primary winding connected to the switching element, a secondary winding, and an auxiliary winding electromagnetically coupled to the primary winding and the secondary winding,
wherein the relay control circuit turns on the relay when a voltage generated in the auxiliary winding exceeds a predetermined threshold.

4. The power converter apparatus as claimed in any one of claims 1 to 3, further comprising:
a capacitor connected so that the input voltage is applied from the DC power supply via the first diode or the relay; and
a resistor connected in series to the first diode,
wherein the relay is connected in parallel to the first diode and the resistor.

5. The power converter apparatus as claimed in claim 4, further comprising a second diode connected in parallel to the capacitor.
